# EUROPEAN PATENT APPLICATION

(11) **EP 4 513 406 A1**
(43) Date of publication of application: **26.02.2025**
(21) Application number: 24196300.8
(22) Date of filing: 23.08.2024
(51) Int. Cl.: G06Q 10/109, G06Q 10/1093, H04L 12/18

(54) **MEETING PROPOSAL GENERATOR**

(30) Priority: 24.08.2023 US 202363578563 P; 15.08.2024 US 202418806078
(71) Applicant: Apple Inc., Cupertino, CA 95014 (US)
(72) Inventor: GUPTA, Ashish A, 95014 Cupertino (US); RATHI, Sureshkumar T, 95014 Cupertino (US); NAGARAJA MUTHAIAH, Skanda, 95014 Cupertino (US)
(74) Representative: Barton, Russell Glen

(57) **Abstract**

Systems and techniques are provided herein to facilitate efficient generation of meeting entries in electronic calendars. In particular, electronic calendar proposals may be generated within a communications application providing increased efficiencies and reducing unnecessary graphical user interface interactions.

## Description

### CROSS REFERENCE TO RELATED APPLICATIONS

This application claims the benefit of U.S. Provisional Application No. 63/578,563, filed August 24, 2023, entitled "Meeting Proposal Generator," which is incorporated by reference herein in its entirety for all purposes.

### BACKGROUND

The present disclosure relates generally to productivity tools, and more specifically to a system and method for automatic generation of meeting proposals between electronic devices based at least in part upon observations of one or more of the electronic devices.

In today's fast-paced environment, electronic device users often rely on electronic calendars within an electronic device to plan and schedule activities. When multiple parties are involved, identifying times and/or locations that work for all parties may be quite challenging, requiring quite a bit of back and forth between the parties to reach an agreement on a time and/or location. A number of different communication channels may facilitate this back and forth, such as via text message, phone conversations, etc. Unfortunately, the process for identifying available times and/or locations and adding activity entries to electronic calendars oftentimes require a number of steps via a dedicated graphical user interface (GUI) of the electronic calendar application. This may require a user to switch between the electronic calendar application and an application associated with the communications channel where the activity is being proposed and/or discussed.

Therefore, there is a need for improved systems and methods for automated generation of electronic calendar entry proposals and establishing confirmed activities from these proposals.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

The present disclosure addresses the shortcomings of prior art by providing a comprehensive system and method for generating electronic calendar proposals and confirmed electronic calendar entries via a communications channel application, thus providing an efficient mechanism for proposing times and/or locations between parties and negating a need to switch between the communications channel application and the electronic calendar application. The system includes a user-friendly interface that aims to revolutionize electronic calendar entry generation, making it more efficient and enjoyable for users, and thereby enhancing productivity and innovation in various fields. Specifically, an interface between an electronic calendar application and communications channel application (e.g., a text messaging application, a conferencing application, a chat application, etc.) may be utilized to send proposed times and/or locations for a meeting between parties utilizing the communications channel application. In some embodiments, natural language processing and/or other techniques may be used to analyze communications between the parties via the communications channel application to determine an intention to meet between the parties. When the intention does not include pertinent information for the meeting (e.g., a time and/or location), an electronic suggestion to create a meeting proposal may be caused to be displayed in a graphical user interface (GUI) of the communications channel application. One of the parties (e.g., "the proposer") may identify one or more proposals for the pertinent information for the meeting and cause the identified proposals to be sent to the other parties (e.g., "the recipient"). The GUI of the recipient's communication channel application may be controlled to display the one or more proposals provided by the proposer and enable selection of particular ones of the one or more proposals. In response to receiving a selection of the particular ones of the one or more proposals, the interface between the electronic calendar application and the communications channel application may be used to generate an electronic calendar entry that includes the selection of the particular ones of the one or more proposals. Further, the calendar entry may include the other parties in the communication via the communications channel application, causing a calendar entry request (e.g., a meeting request) to be transmitted to the other parties. Because the other parties have already acknowledged that they are ok with proposals (e.g., either by proposing them or by selecting from received proposals), the electronic calendar entry request may be automatically accepted without further input from the other parties via their electronic devices. For example, the interface may identify that the electronic calendar entry request has been received and provide a command to cause the electronic calendar application to generate an accepted calendar entry for the request.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

Various aspects of this disclosure may be better understood upon reading the following detailed description and upon reference to the drawings described below in which like numerals refer to like parts.
FIG. 1 is a block diagram of an electronic device that provides automated electronic calendar proposals, in accordance with one or more embodiments of the current application;
FIG. 2 is a flowchart, illustrating a process for triggering automatic electronic calendar proposals, in accordance with one or more embodiments of the current application;
FIG. 3 is a flowchart, illustrating a process for implementing automatic electronic calendar proposals, in accordance with one or more embodiments of the current application;
FIG. 4 is a flowchart, illustrating a process for identifying missing information to be added to an electronic calendar proposal based upon identified context, in accordance with one or more embodiments of the current application;
FIG. 5 is a schematic diagram of electronic devices using a text-based communications channel, where the communications may cause triggering of a processor for an automatic generation of electronic calendar proposal, in accordance with one or more embodiments of the current application;
FIGS. 6A-6D (collectively "FIG. 6") are schematic diagrams of graphical user interface (GUI) transitions used to generate an electronic calendar proposal, in accordance with one or more embodiments of the current application;
FIG. 7 is a schematic diagram, illustrating a GUI interaction for transmitting an electronic calendar proposal, in accordance with one or more embodiments of the current application;
FIG. 8 is a schematic diagram, illustrating GUI states after the electronic calendar proposal is transmitted, in accordance with one or more embodiments of the current application;
FIGS. 9A and 9B (collectively "FIG. 9) are schematic diagrams, illustrating GUI states where an electronic calendar proposal is opened, causing a plurality of selectable options to be selected from, resulting in a confirmed electronic calendar entry, in accordance with one or more embodiments of the current application;
FIG. 10 is a schematic diagram, illustrating a GUI interaction where an indication of the confirmed electronic calendar entry is transmitted back to the proposing electronic device, in accordance with one or more embodiments of the current application;
FIG. 11 is a schematic diagram, illustrating a GUI interaction where the indication of the confirmed electronic calendar entry is opened at the proposing electronic device, causing prior reserved entries not associated with the confirmed electronic calendar entry to be removed, in accordance with one or more embodiments of the current application; and
FIG. 12 is a schematic diagram, illustrating the electronic calendar of the proposing electronic device after receiving and/or opening the indication of the confirmed electronic calendar entry, in accordance with one or more embodiments of the current application.

### DETAILED DESCRIPTION OF SPECIFIC EMBODIMENTS

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. Furthermore, the particular features, structures, or characteristics may be combined in any suitable manner in one or more embodiments. Use of the terms "approximately," "near," "about," "close to," and/or "substantially" should be understood to mean including close to a target (e.g., design, value, amount), such as within a margin of any suitable or contemplatable error (e.g., within 0.1 % of a target, within 1% of a target, within 5% of a target, within 10% of a target, within 25% of a target, and so on). Moreover, it should be understood that any exact values, numbers, measurements, and so on, provided herein, are contemplated to include approximations (e.g., within a margin of suitable or contemplatable error) of the exact values, numbers, measurements, and so on. Additionally, the term "set" may include one or more. That is, a set may include a unitary set of one member, but the set may also include a set of multiple members.

This disclosure is directed to facilitating efficient generation of electronic calendar entries by enabling electronic calendar entry proposals via a communications channel application graphical user interface (GUI). In particular, in some embodiments, natural language processing (NLP) and/or other techniques may be used to analyze communications between parties via the communications channel application. Upon identification of an indication of a desire for the parties to meet, the GUI may be controlled to provide a graphical suggestion to generate a meeting proposal. Upon receiving an indication to generate the meeting proposal, the GUI may be controlled to present parameter options for the meeting, such as location options and/or time options. A selection of parameters may be received via the GUI and the selected parameters may be provided to the other party/parties of the communication. The other party may select from the selected parameters, thereby confirming one or more particular parameters of the meeting. In response, accepted electronic calendar entries using the confirmed one or more particular parameters may be generated for each of the parties of the communication.

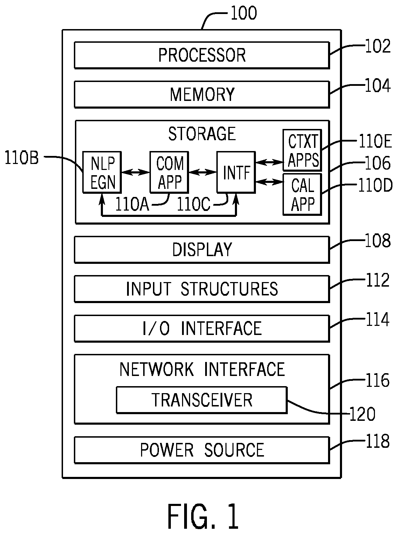

FIG. 1 is a block diagram of an electronic device 100, according to embodiments of the present disclosure. The electronic device 100 may include, among other things, one or more processors 102 (collectively referred to herein as a single processor for convenience, which may be implemented in any suitable form of processing circuitry), memory 104, nonvolatile storage 106, a display 108, input structures 112, an input/output (I/O) interface 114, a network interface 116, and a power source 118. The various functional blocks shown in FIG. 1 may include hardware elements (including circuitry), software elements (including machine-executable instructions) or a combination of both hardware and software elements (which may be referred to as logic). The processor 102, memory 104, the nonvolatile storage 106, the display 108, the input structures 112, the input/output (I/O) interface 114, the network interface 116, and/or the power source 118 may each be communicatively coupled directly or indirectly (e.g., through or via another component, a communication bus, a network) to one another to transmit and/or receive signals between one another. It should be noted that FIG. 1 is merely one example of a particular implementation and is intended to illustrate the types of components that may be present in the electronic device 100.

By way of example, the electronic device 100 may include any suitable computing device, including a desktop or notebook computer, a portable electronic or handheld electronic device such as a wireless electronic device or smartphone, a tablet, a wearable electronic device, and other similar devices. In additional or alternative embodiments, the electronic device 100 may include an access point, such as a base station, a router (e.g., a wireless or Wi-Fi router), a hub, a switch, and so on. It should be noted that the processor 102 and other related items in FIG. 1 may be embodied wholly or in part as software, hardware, or both. Furthermore, the processor 102 and other related items in FIG. 1 may be a single contained processing module or may be incorporated wholly or partially within any of the other elements within the electronic device 100. The processor 102 may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that may perform calculations or other manipulations of information. The processors 102 may include one or more application processors, one or more baseband processors, or both, and perform the various functions described herein.

In the electronic device 100 of FIG. 1, the processor 102 may be operably coupled with a memory 104 and a nonvolatile storage 106 to perform various algorithms. For example, the storage 106 may store a communications channel application 110A that includes one or more computer-readable instructions that cause the processor 102 to perform at least a portion of functions useful for facilitating communicates between a user of the electronic device 100 and other users of other electronic devices. For example, the communications channel application 110 may include a text messaging application, such as a short messaging service (SMS) application and/or other text-based messaging application, a conferencing application, such as a video conferencing and/or audio conferencing application, a productivity software application that includes communications features, such as Keynote^{®}, Freeform^{®}, etc. , by Apple, Inc.^{®} and/or online communications platforms.

In some embodiments, the storage 106 may also store a natural language processing (NPL) engine 110B, which may include one or more computer-readable instructions that cause the processor 102 to perform natural language processing on communications facilitated by the communications channel application 110A. The NLP engine 110B may perform natural language processing on the communications of the communications channel application 110A to identify when parties of the communication desire to meet. In some instances, as will be discussed in more detail below, upon identified such a desire through the NLP engine 110B, an indication of the identified desire may be provided to an electronic calendar interface 110C, communicatively coupling the communications channel application 110A and an electronic calendar application 110D, which may also be stored in the storage 106. While the depicted embodiment illustrates the NLP engine 110B stored within the storage 106, local to the electronic device 100, in some embodiments, the NLP engine 110B may be implemented remote to the electronic device 100, via data transmission of communication data via the transceiver 120, for example.

The electronic calendar interface 110C may include one or more computer-readable instructions that cause the processor 102 to facilitate at least a portion of the electronic calendar entry proposal and/or confirmation techniques described herein. For example, upon receiving an indication from the NLP engine 110B that the parties have indicated a desire to meet, the electronic calendar interface 110C may, in some embodiments, cause a graphical user interface (GUI) of the communication channel application 110A to provide a graphical suggestion to generate a meeting proposal to send to the other parties of the communication. Upon receiving an indication to generate the meeting proposal, the electronic calendar interface 110C may generate a meeting proposal parameter selection GUI within the communications channel application 110A, enabling a user to select proposal parameters to be sent to the other parties of the communication. For example, the electronic calendar interface 110C may access the electronic calendar application 110D to identify available meeting times that can be selected as proposal parameters. To do this, the electronic calendar interface may access the electronic calendar application 110D to obtain calendared events of the user. As will be discussed in more detail below, the meeting proposal parameter selection GUI may include a graphical view of one or more electronic calendars maintained and/or accessible by the electronic calendar application 110D, while providing an affordance to select one or more proposed dates and/or times as the time parameters for the meeting proposal. Further, the electronic calendar interface 110C may access one or more contextual applications 110E, which may provide additional context regarding the communication and a subset of parameters that may most likely be desired for the meeting proposal. For example, a contextual application 110E may include an electronic map application that may provide additional context around preferred locations of the meeting (e.g., as determined based upon the communication parties' locations and/or words provided in the communication). In some embodiments, these contextual applications 110E may be used to form a portion of the meeting proposal parameter selection GUI.

Once the meeting proposal parameters are selected, the electronic calendar interface 110C of the proposing electronic device 100 (e.g., "the proposer") may cause an indication of the meeting proposal to be sent to the other parties of the communication (e.g., via the transceiver 120), The receiving electronic device (e.g., "the receiver") may include a corresponding interface that enables view of each of proposed parameters and selection of a subset of the proposed parameters. In some embodiments, the electronic calendar interface 110C may cause the proposer's electronic calendar to temporarily block off/reserve each of the proposed times and/or locations until a confirmed selection of a subset of the proposed parameters is returned from the receiver's electronic device. To do this, the electronic calendar interface 110C may send one or more commands to generate electronic calendar entries for each of the proposed parameters.

Upon receipt of a selection of the subset of the proposed parameters from the receiver's electronic device, the electronic calendar interface 110C may cause creation of a confirmed calendar entry in the proposer's electronic calendar that includes the selected subset of the proposed parameters (e.g., time and/or location). Further, the other previously blocked off/reserved calendar entries may be removed. To do this, the electronic calendar interface 110C may send one or more commands to the electronic calendar application 110D to remove the previously requested calendar entries that included the proposed parameters not in the selected subset of the proposed parameters. In this manner, the blocked off/reserved calendar entries may be removed except for the one calendar entry matching the selected subset of the proposed parameters.

Such programs or instructions executed by the processor 102 may be stored in any suitable article of manufacture that includes one or more tangible, computer-readable media. The tangible, computer-readable media may include the memory 104 and/or the nonvolatile storage 106, individually or collectively, to store the instructions or routines. The memory 104 and the nonvolatile storage 106 may include any suitable articles of manufacture for storing data and executable instructions, such as random-access memory, read-only memory, rewritable flash memory, hard drives, and optical discs. In addition, programs (e.g., an operating system) encoded on such a computer program product may also include instructions that may be executed by the processor 102 to enable the electronic device 100 to provide various functionalities.

In certain embodiments, the display 108 may facilitate users to view images generated on the electronic device 100. In some embodiments, the display 108 may include a touch screen, which may facilitate user interaction with a user interface of the electronic device 100. Furthermore, it should be appreciated that, in some embodiments, the display 108 may include one or more liquid crystal displays (LCDs), light-emitting diode (LED) displays, organic light-emitting diode (OLED) displays, active-matrix organic light-emitting diode (AMOLED) displays, or some combination of these and/or other display technologies.

The input structures 112 of the electronic device 100 may enable a user to interact with the electronic device 100 (e.g., pressing a button to increase or decrease a volume level). The I/O interface 114 may enable electronic device 100 to interface with various other electronic devices, as may the network interface 116. In some embodiments, the I/O interface 114 may include an I/O port for a hardwired connection for charging and/or content manipulation using a standard connector and protocol, such as the Lightning connector, a universal serial bus (USB), or other similar connector and protocol. The network interface 116 may include, for example, one or more interfaces for a personal area network (PAN), such as an ultra-wideband (UWB) or a BLUETOOTH^{®} network, a local area network (LAN) or wireless local area network (WLAN), such as a network employing one of the IEEE 802.11x family of protocols (e.g., WI-FI^{®}), and/or a wide area network (WAN), such as any standards related to the Third Generation Partnership Project (3GPP), including, for example, a 3^{rd} generation (3G) cellular network, universal mobile telecommunication system (UMTS), 4^{th} generation (4G) cellular network, Long Term Evolution ^{®} (LTE) cellular network, Long Term Evolution License Assisted Access (LTE-LAA) cellular network, 5^{th} generation (5G) cellular network, and/or New Radio (NR) cellular network, a 6^{th} generation (6G) or greater than 6G cellular network, a satellite network, a non-terrestrial network, and so on. In particular, the network interface 116 may include, for example, one or more interfaces for using a cellular communication standard of the 5G specifications that include the millimeter wave (mmWave) frequency range (e.g., 24.25-300 gigahertz (GHz)) that defines and/or enables frequency ranges used for wireless communication. The network interface 116 of the electronic device 100 may allow communication over the aforementioned networks (e.g., 5G, Wi-Fi, LTE-LAA, and so forth).

The network interface 116 may also include one or more interfaces for, for example, broadband fixed wireless access networks (e.g., WIMAX^{®}), mobile broadband Wireless networks (mobile WIMAX^{®}), asynchronous digital subscriber lines (e.g., ADSL, VDSL), digital video broadcasting-terrestrial (DVB-T^{®}) network and its extension DVB Handheld (DVB-H^{®}) network, ultra-wideband (UWB) network, alternating current (AC) power lines, and so forth.

As illustrated, the network interface 116 may include a transceiver 120. In some embodiments, all or portions of the transceiver 120 may be disposed within the processor 102. The transceiver 120 may support transmission and receipt of various wireless signals via one or more antennas, and thus may include a transmitter and a receiver. The power source 118 of the electronic device 100 may include any suitable source of power, such as a rechargeable lithium polymer (Li-poly) battery and/or an alternating current (AC) power converter.

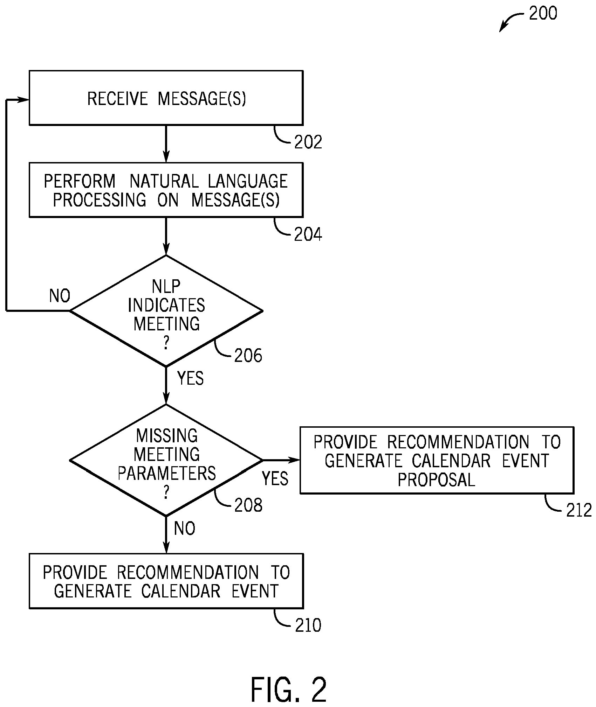

FIG. 2 is a flowchart, illustrating a process 200 for triggering automatic electronic calendar proposals, in accordance with one or more embodiments of the current application. As mentioned above, one or more messages are received via the communications channel application 110A (block 202). For example, text messages may be received, audio correspondence may be received, etc.

Natural language processing (NLP) may be performed on the received messages (block 204). To do this, the messages may be sent to the NLP engine 110B for analysis. In some embodiments, message-by-message NLP may be performed to a context of each message individually, by submitting each message independently to the NLP engine 110B. In other embodiments, for efficient processing, the NLP may be performed with respect to clusters of messages. The clusters may be defined based upon a number of sequential messages (e.g., batching a block of a particular number of sequential messages at a time for analysis by the NLP engine 110B), a time block (e.g., submitting all messages received within a particular block of time (e.g., 5 seconds), time-between blocks (e.g., submitting a cluster of messages where the messages all occurred within a threshold amount of time between one another), etc.

A determination is made as to whether the natural language processing of the messages indicate that the parties of the communication desire to meet (decision block 206). If the messages do not indicate a desire to meet, the process 200 repeats. However, if the messages do indicate a desire to meet, a determination is made as to whether the messages include the parameters for the desired meeting (decision block 208). For example, the parameters may include at least a time to meet. In some embodiments, the parameters may include a location of the meeting.

When it is determined that the parameters are indicated in the messages, a recommendation to generate a calendar event may be presented via the communications channel application 110A (block 210). For example, a selectable banner may be provided to that indicates that an electronic calendar entry can be generated based upon the identified desire to meet and parameters discerned from the messages of the communication. Upon selection of the banner, the electronic calendar interface 110C may cause the electronic calendar entry to be generated by providing a command to the electronic calendar application 110D.

Returning to decision block 208, when it is determined that parameters are missing, a graphical indication may be provided, indicating that an electronic calendar event proposal may be generated (block 212). For example, a selectable banner may be provided within the communication channel application 110A. When the selectable banner is selected, a process for generating the electronic calendar proposal may be launched.

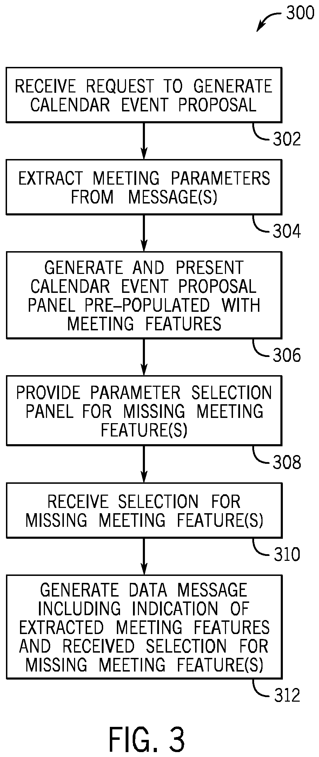

FIG. 3 is a flowchart, illustrating a process 300 for generating automatic electronic calendar proposals, in accordance with one or more embodiments of the current application. The process 300 beings with receiving a request to generate an electronic calendar event proposal (block 302). As described above, this request may be received in response to a selection of a selectable banner suggesting generation of an electronic calendar proposal.

The process 300 attempts to glean previously proposed meeting parameter details by extracting meeting parameters previously discussed in the communication messages between communicating parties (block 304). For example, as will be discussed in the examples below, certain contextual clues and/or explicit meeting parameters may be provided in the communication, such as a day, date, location, type of meeting, etc.

An electronic calendar proposal graphical panel may be presented via the GUI of the communications channel application 110A (block 306). As will be illustrated below, in some embodiments, the electronic calendar proposal graphical panel may be pre-populated with at least a portion of the extracted meeting parameters from block 304. For example, a title of the meeting may be pre-populated with one or more words from the communication messages.

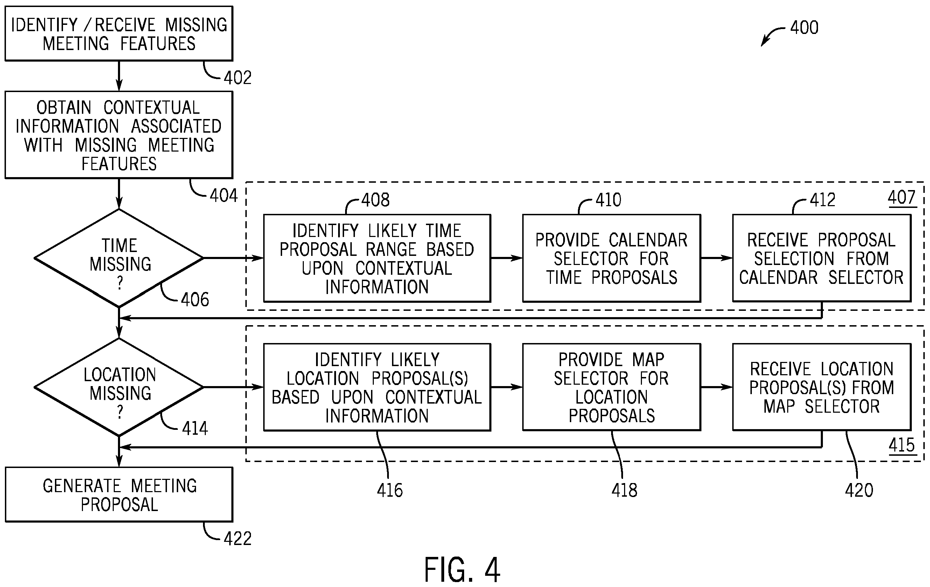

One or more parameter selection panels may be provided in the GUI, enabling the proposer to select one or more proposed parameters for the meeting (block 308). For example, a parameter selection panel may present a view of the proposer's electronic calendar with selectable time spots where proposed time parameters for the meeting may be selected for the proposal. A parameter selection panel may also provide a map with selectable locations where a location may be selected for the proposal. As will be discussed in more detail with respect to FIG. 4, contextual information from the communication messages may provide some level of information regarding the missing parameters, such as providing an indication that the meeting may occur in the "evening time" without a specific time indication and/or that the location will be a place that serves "drinks" without an indication of a particular location that serves drinks. As will be discussed in more detail below, the process of FIG. 4 provides contextual awareness that results in more applicable displays within the parameter selection panels.

Once selections are made via the GUI, the selections from the one or more parameter selection panels may be received (block 310) and a data message (e.g., the "electronic calendar proposal") including the extracted meeting features and received selections may be generated for transmission to the receiver's electronic device (block 312). For example, a data object including the selected times, the location, an/or other details of the meeting may be generated. A representation of the generated data object may be provided in the communications channel application 110A along with an affordance to send the data object to the recipient electronic device(s).

As mentioned above, FIG. 4 is a flowchart, illustrating a process 400 for identifying missing information to be added to an electronic calendar proposal based upon identified context, in accordance with one or more embodiments of the current application. Contextual information from the communication messages may provide some level of information regarding the missing parameters, such as providing an indication that the meeting may occur in the "evening time" without a specific time indication and/or that the location will be a place that serves "drinks" without an indication of a particular location that serves drinks. The process 400 of FIG. 4 uses contextual awareness to generate more applicable selection displays for selecting parameters for the proposals.

The process 400 begins with identifying and/or receiving an indication of missing meeting parameters that should be obtained (block 402). For example, in some embodiments, at a minimum, a time should be associated with a meeting. If the time is not provided in the communication messages or multiple times are possible based upon the communication messages (e.g., the time is only described as "evening time") then the parameter is identified as missing.

Contextual information associated with the missing meeting features is obtained (block 404). For example, an indication of meeting "in the evening time" provided in the communication messages may provide context for the parameter of the meeting time. Further, an indication in the communication message that the parties will "grab a drink" may provide context for the parameter of the meeting location. Further, another contextual point for the location may be the current locations of the parties and/or the predicted location of the parties near the meeting time.

The process 400 includes determining whether a meeting time is missing from the contextual information (decision block 406). For example, as discussed herein, the communication messages may indicate a day and maybe even contextual information indicating a time range. However, the communications may fail to indicate a specific time that would enable the communicating parties to understand when the meeting would take place. In such an instance, the meeting time would be identified as missing.

If the meeting time is missing, a time selection process 407 may be performed. The time selection process 407 may be performed to enable a user to select time proposals for a meeting. In some embodiments, this may be facilitated by providing a default GUI view based upon an identified time context of the meeting. Thus, the time selection process 407 may include identifying the likely time proposal range based upon contextual information (block 408). For example, machine learning models may identify the likely time proposal range based upon the communication messages.

As used herein, the machine learning may refer to algorithms and statistical models that computer systems use to perform a specific task with or without explicit instructions. For example, a machine learning process may generate a mathematical model based on a sample of the clean data, known as "training data," in order to make predictions or decisions without being explicitly programmed to perform the specific task. Depending on the inferences to be made, different machine learning algorithms may be used to analyze the data.

In some embodiments, a supervised machine learning algorithm may be implemented using a mathematical model of a set of data samples referred to as "training data" and containing both inputs and desired outputs. Each data sample may include one or more inputs and corresponding desired one or more outputs, also known as supervisory signals. In the mathematical model, each data sample may be represented by an array or vector, sometimes called a feature vector, and the training data may be represented by a matrix. Through iterative optimization of an objective function, the supervised machine learning algorithm may learn a function (e.g., optimal function) that can be used to predict outputs associated with new inputs. That is, the optimal function may allow the supervised machine learning algorithm to correctly predict corresponding outputs for certain inputs that are not presented in the training data. Such algorithm that improves the accuracy of its outputs or predictions over time is said to have learned to perform the specific task.

Supervised learning algorithms may include classification and regression. Classification algorithms are used when the outputs are restricted to a limited set of values, and regression algorithms are used when the outputs may have any numerical value within a range. Similarity learning is an area of supervised machine learning closely related to regression and classification, but the goal is to learn from examples using a similarity function that measures how two objects are similar or related.

Additionally and/or alternatively, in some embodiments, an unsupervised machine learning algorithm may be implemented (e.g., when particular output types are not known). The unsupervised learning algorithm may take a set of data samples that contains only inputs, and find structure in the data samples, such as grouping or clustering of the data samples. The unsupervised learning algorithm, therefore, learn from the data samples that have not been labeled, classified, or categorized. Instead of responding to feedbacks, unsupervised learning algorithms identify commonalities in the data and react (e.g., predict outputs) based on the presence or absence of such commonalities in each new piece of data.

Cluster analysis is the assignment of a set of observations into subsets (called clusters) so that observations within the same cluster are similar according to one or more predesignated criteria, while observations drawn from different clusters are dissimilar. Different clustering techniques make different assumptions on the structure of the data, often defined by some similarity metric and evaluated, for example, by internal compactness, or the similarity systems or algorithms of the same cluster.

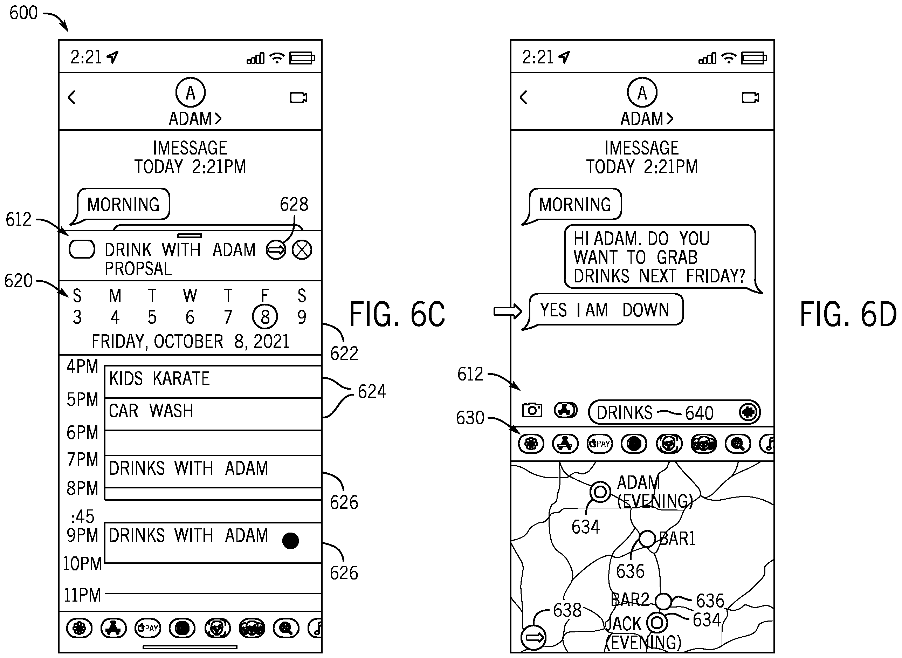

Once the likely proposal time range is identified, a calendar timeslot proposal selector may be provided (block 410). An example of such a timeslot proposal selector is provided in FIG. 6C, which will be discussed in more detail below. The timeslot proposal selector enables a user to select one or more timeslot proposals for a meeting between the communication participants. The selected timeslots are received via the GUI (block 412).

The process 400 may also include determining whether the meeting location is missing (decision block 414). For example, if the communication messages do not specify a particular location of the meeting, the location may be determined to be missing.

If the location is determined to be missing, a location selection process 415 may be implemented. As with the timeslots for the meeting, contextual information about the location for the meeting may also be used to facilitate selection of proposal locations. Accordingly, location selection process 415, in some embodiments, may include identifying a likely location proposals based upon identified contextual information about the location (block 416). For example, a location and/or predicted location of the communicators may be used to identify feasible and/or desirable locations for the meeting. Further, the meeting type (e.g., meeting for "drinks") may indicate a type of location (e.g., a location that serves drinks) that may likely be selected as a proposal location. As with the timeslot proposals, in some embodiments, the likely location proposals may be identified via machine learning.

A map selector may be provided via a GUI that presents the likely location proposals (block 418). FIG. 6D provides an example of such a location selector, which is described in more detail below. The location selector includes affordances for selecting one or more location proposals to incorporate into the meeting proposals. The selected location proposals may be received via the map selector (block 420).

Once thee missing meeting features are selected and received, a meeting proposal may be generated (block 422). As described herein, this may entail generating a meeting proposal object that includes meeting features obtained via the communications messages and/or missing meeting features that are obtained via process 407, process 415, or the like.

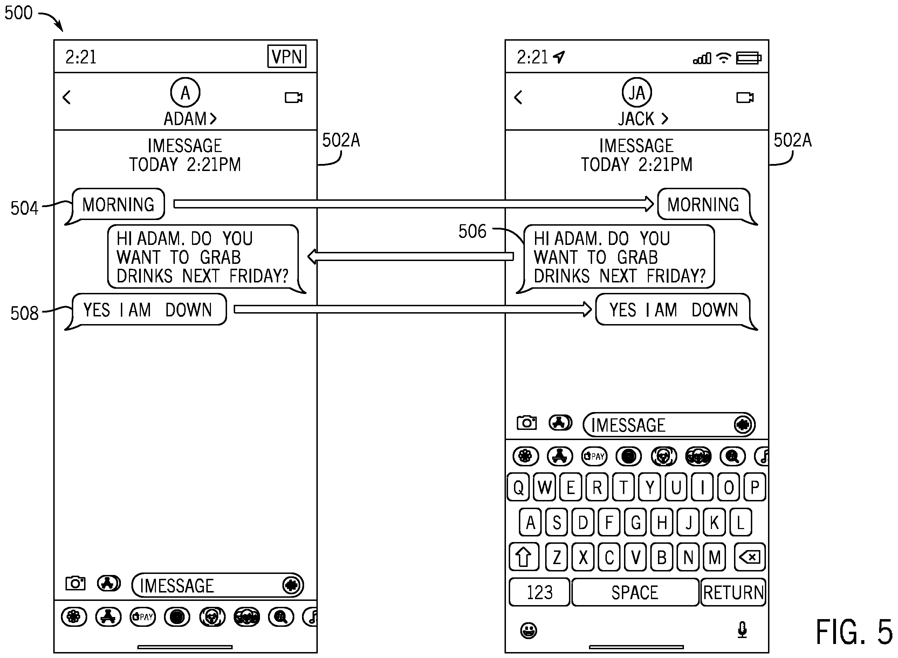

FIG. 5 is a schematic diagram 500 of electronic devices 502A and 502B using a text-based communications channel, where the communications may cause triggering of a processor for an automatic generation of electronic calendar proposal, in accordance with one or more embodiments of the current application. As illustrated, electronic device 502A initiates the communication, by providing a message 504 to electronic device 502B. The message 504 is received and displayed by electronic device 502B. As indicated above with respect to FIG.2, electronic device 502B may perform NLP on the message to determine whether the message indicates a meeting. Here, electronic device 502B determines that the message "Morning" does not indicate a meeting.

A response message 506 is provided from electronic device 502B back to electronic device 502A. Electronic device 502A may receive and display the response message 506. In the illustrated example, this message 506 includes a meeting indication (e.g., which may be determined by NLP performed by electronic device 502A upon receiving the message and/or by electronic device 502B). If electronic device 502B is the electronic device that performs the NLP that identifies that the message 506 indicates a meeting, additional data may be sent with the message 506, informing the electronic device 502A of this determination, enabling electronic device 502A to become aware of the message indicating a meeting.

At this point, in some embodiments, an electronic suggestion to create a calendar entry and/or meeting proposal may be triggered for provision by the electronic device 502A and/or 502B. However, in some embodiments, such as the depicted embodiment, the electronic suggestion may be triggered upon a confirmation message 508 being generated and/or sent in response to the received message 506 indicating the meeting. For example, here, a confirmation message 508 is generated and sent to electronic device 502B, indicating an affirmative response to the received message 506, which proposed a meeting, thus indicating that the user of the electronic device 502A is interested in meeting the user of electronic device 502B.

As mentioned above, the confirmation message 508 and/or generation and/or receipt of a message that indicates a meeting may trigger an electronic suggestion to generate a calendar entry and/or meeting proposal. As discussed above with respect to FIG. 2, an electronic suggestion to generate a calendar entry may be triggered when a minimum amount of meeting information may be gleaned from the from communication messages. In some embodiments, an electronic suggestion to create a meeting proposal may be triggered when at least a portion of the minimum amount of meeting information cannot be gleaned from the communication messages. To identify the meeting information present in the communications messages, the electronic device 502A and/or 502B may identify a subset of communication messages pertaining to the meeting (e.g., by identifying the first message indicating the meeting and all other messages generated and/or sent subsequent to that first message but prior to presenting the electronic suggestion). NLP or other machine learning techniques may be used on this subset of messages to identify meeting information, which may be extracted to identify whether the minimum meeting information is present.

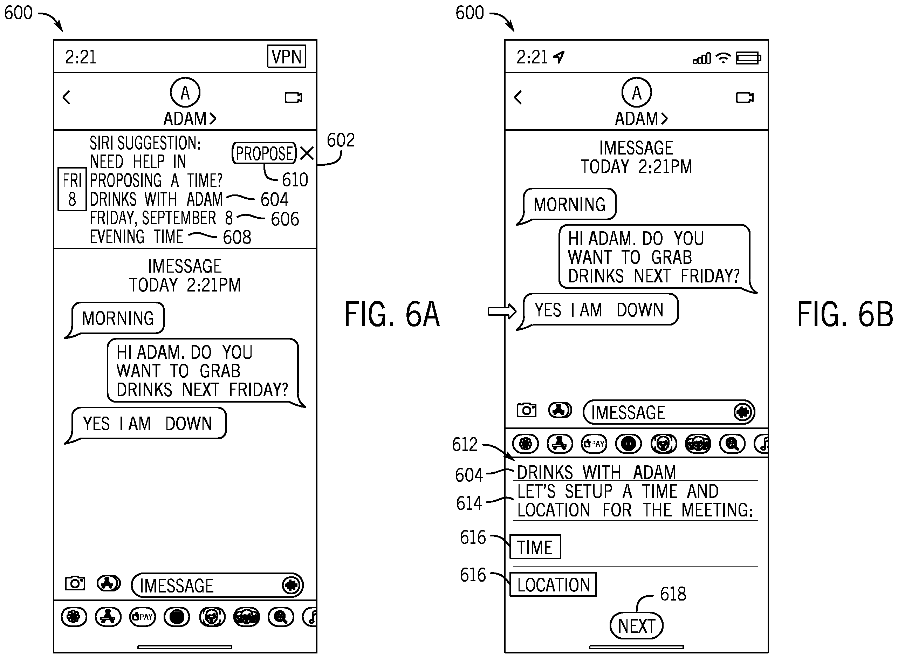

In the example provided in FIG. 5, the minimum amount of meeting information may include a time of the meeting and/or location of the meeting. This information is not provided in the messages 504, 506, and/or 508. Accordingly, a suggestion to generate a meeting proposal may be triggered. FIG. 6A is a schematic diagram of a graphical user interface (GUI) 600 where the GUI 600 provides an electronic suggestion 602 in response to the messages 506 and/or 508 being generated, transmitted, and/or received. As illustrated, in some embodiments, the electronic suggestion 602 may include an overlay presented over a portion of the GUI of the communications channel application 110A. The electronic suggestion 602 may include at least a portion of the meeting information extracted from the communication messages. For example, in the depicted embodiment, a title 604 for the proposed meeting may include an indication of the type of event and proposer's name, which may be identified from extracted meeting information of the communication messages. Additionally, contextual information that may aid in determining the missing meeting information may also be extracted. At least a portion of this contextual information may be provided in the electronic suggestion 602. For example, the message 506 does not provide a time, but does provide a proposed day for the meeting (e.g., "next Friday"). Further, the message 506 does not provide a location for the meeting, but does provide a context for the type of meeting (e.g., "Drinks"). This information may be used to narrow time and/or location proposals. For example, the time may be narrowed to timeslots that occur "next Friday" and further may be narrowed to times typically applicable for the particular meeting type. Thus, a contextual indication 606 is provided in the electronic suggestion 602.

As will be discussed in more detail below, additional inferences may also be identified, which may further influence a default view for meeting proposal GUIs. For example, "Drinks" may refer to cocktails, which may be used to infer that the meeting will occur sometime in the evening time and/or at a bar or similar venue, as these are typical time ranges and/or venues which are typical a "Drinks" event type. An inference indication 608 (e.g., the evening time inference) may be provided in the electronic suggestion 602.

The electronic suggestion 602 may also include a selectable affordance 610. In some embodiments, the selectable affordance may be the electronic suggestion 602 itself, wherein upon selection of at least a portion of the electronic suggestion 602, the selection occurs. The selection of the selectable affordance 610 may trigger withdraw of rendering of the electronic suggestion 602 and/or rendering of a meeting proposal generator GUI element 612, as indicated in FIG. 6B. In the depicted embodiment of FIG. 6B, the meeting proposal generator GUI element 612 includes a sliding GUI panel that provides the title 604 of the meeting proposal and an indication 614 of the missing meeting information that may be indicated via the meeting proposal generator GUI element 612 (e.g., time and location in the depicted embodiment). In some embodiments, individual selectable affordances 616 may be rendered, enabling a user to select particular missing meeting information to set via the meeting proposal generator GUI element 612. In some embodiments, a sequential indication process may be selected via a sequential indication selection affordance 618. When selected, the sequential indication selection affordance 618, enables sequential indication of each of the portions of the missing meeting information via the meeting proposal generator GUI element 612.

FIG. 6C is a schematic diagram, illustrating a time selection GUI 620 of the meeting proposal generator GUI element 612 that facilitates provision of proposed meeting timeslots, in accordance with one or more embodiments of the current application. The time selection GUI 620 may render a calendar view 622 of an electronic calendar of the local electronic device (e.g., electronic device 502A). The electronic calendar view 622 may display a date and/or time range based upon the contextual information provided in the communication messages. For example, in FIG. 6C the electronic calendar view 622 defaults to "next Friday" the 8^{th} , as indicated by message 506 and further provides a default view of "evening time" time slots, as inferred from message 506. As may be appreciated, the default view may be changed by selecting different date and/or time affordances within the electronic calendar view 622.

The electronic calendar view 622 may be populated with existing electronic calendar entries 624, which may be obtained from the electronic calendar application 110D via the interface 110C. The electronic calendar view 622 enables quick selection of proposal timeslots 626 via interactions (e.g., touches, selections, etc.) within the electronic calendar view 622. As illustrated, multiple proposal time slots may be selected, enabling a user to propose a plurality of meeting time options. The start time, end time, duration, etc. may be adjusted by moving and/or adjusting the proposal timeslots 626. For example, an edge of one of the proposal timeslots 626 may be moved, which would adjust the time associated with that edge and a duration of the associated proposal timeslot 626. Once the proposal timeslots are all selected, a completion affordance 628 may be selected, indicating that all of the proposal timeslots 626 have been selected and are ready for transmission to the other electronic device (e.g., electronic device 502B).

FIG. 6D is a schematic diagram, illustrating a location selection GUI 630 of the meeting proposal generator GUI element 612 that facilitates provision of proposed meeting locations, in accordance with one or more embodiments of the current application. The location selection GUI 630 may render a map view 632 with possible meeting location proposals. The map view 632 may display default location proposal recommendations based upon the contextual information provided in the communication messages. For example, in FIG. 6D the map view 632 may default to a map with locations around where the meeting attendees will likely be in the evening time, the time period inferred from message 506. These locations may, in some embodiments, be displayed in the map view 632 (e.g., here at points 634). In some embodiments, when the proposal timeslots 626 have been selected, the times associated with the proposal timeslots 626 may be used as context for the proposed locations. Proposed locations may be filtered based upon availability during the contextual and/or proposal timeslot 626 time periods. Thus, locations that are closed during these time periods may be filtered from the map view 632. Predicted locations of the meeting attendees may be identified using contextual information, such as other meeting locations prior to or subsequent to the proposal timeslots 626. In some embodiments, machine learning may be used to predict attendee locations (e.g., based upon location patterns of the attendees, etc.) As may be appreciated, the default view may be changed by adjusting the map view 632.

The map view 632 enables quick selection of proposal locations 636 via interactions (e.g., touches, selections, etc.) within the map view 632 (e.g., at locations represented within the map view 632). As illustrated, multiple proposal locations 636 may be selected, enabling a user to propose a plurality of meeting location options. Once the proposal locations 636 are all selected, a completion affordance 638 may be selected, indicating that all of the proposal timeslots 626 have been selected and are ready for transmission to the other electronic device (e.g., electronic device 502B). A keyword affordance 640 may provide an indication of a particular keyword or keywords that were queried to identify the proposal locations 636. The keywords may be based upon meeting information extracted from the communication messages. If desired, the keywords may be changed via the keyword affordance 640 to adjust the proposal locations 636. For example, if the attendees intended "drinks" to mean coffee instead of cocktails, the keyword "drinks" could be replaced with "coffee" in the keyword affordance 640.

When the keyword affordance 640 is altered prior to selection of proposal timeslots via the time selection GUI 620, a contextual shift may occur based upon the changed keyword, causing the default view of the location selection GUI 630 and/or the electronic calendar view 622 to shift. For example, when "drinks" is changed to "coffee", this may indicate a likely adjustment from "evening time" to "morning time", which may cause the default view of electronic calendar view 622 to adjusted to a different time range and/or may cause the default view of the location selection GUI 630 to adjust to a view encompassing predicted locations of the attendees in the morning time.

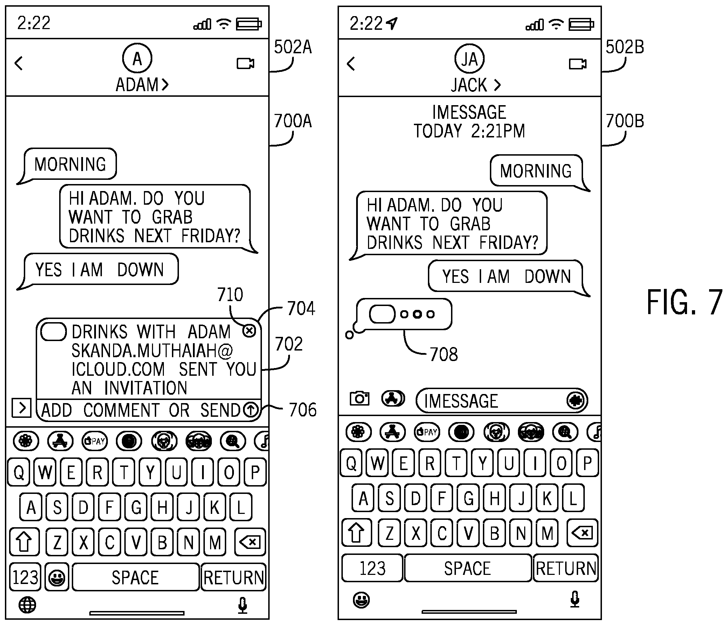

As mentioned above with respect to FIG. 3, upon provision and/or reception of the missing meeting features, a data message including the meeting features may be generated. FIG. 7 is a schematic diagram, illustrating communications application GUI states 700A and 700B of the proposing electronic device 502A and the receiving electronic device 502B, in accordance with one or more embodiments of the current application. As illustrated, a data message icon 702 ) representative of a generated data message (e.g., an object designed to be conveyed via the communications application) is rendered in a message input affordance 704 where messages to send to recipients (e.g., a user of electronic device 502B) may be inputted. To send the generated data message to the electronic device 502B, a transmit message affordance 706 may be actuated while the data message icon 702 is rendered within the message input affordance 704. Prior to sending the data object, the GUI state 700B may display a message generation awareness icon 708, indicating that a message is being generated for the communication between electronic device 502A and 502B at the other electronic device (e.g., electronic device 502A). In some embodiments, the message generation awareness icon 708 may be displayed while the meeting proposal inputs are being performed (e.g., while the meeting proposal generator GUI element 612 is displayed on electronic device 502A, while time and/or location proposals are being selected, etc.). In some embodiments, the message generation awareness icon 708 may be displayed starting at a time when the data message icon 702 is rendered within the message input affordance 704. The message generation awareness icon 708 may be displayed until the data message is sent (e.g., via actuation of transmit message affordance 706) and/or the data message is withdrawn (e.g., deleted and/or cancelled from generation, such as by actuating cancel affordance 710 and/or a cancel affordance of the meeting proposal generator GUI element 612). The message generation awareness icon 708 may be refrained from display when a configuration of the electronic device 502A opts out of providing such awareness to other electronic devices.

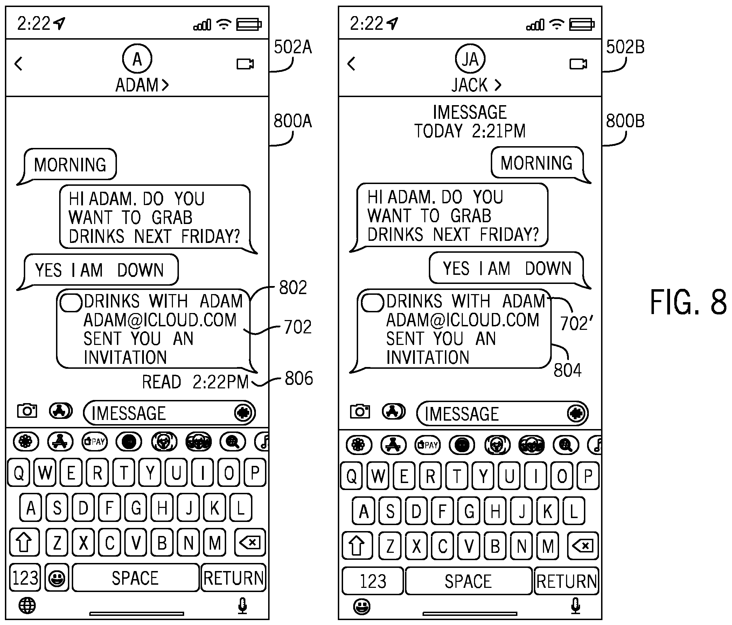

FIG. 8 is a schematic diagram, illustrating GUI states 800A and 800B of electronic devices 502A and 502B, respectively, after the electronic calendar proposal is transmitted from electronic device 502A to electronic device 502B, in accordance with one or more embodiments of the current application. In GUI state 800A of the proposing electronic device 502A that transmitted the data message, a message indicator 802 (e.g., a historical message cloud icon) indicating that the data message was sent (e.g., by displaying the data message icon 702 within the message indicator 802) is displayed.

Electronic device 502B may receive a message 804 containing the data message icon 702, which may be rendered in GUI state 800B of electronic device 502B. If a configuration of the electronic device 502B allows, a read receipt may be provided by the electronic device 502B to electronic device 502A, resulting in an indication 806 that that a user of the electronic device 502B has received and seen the data message (e.g., by seeing the data message icon 702') provided in message 804 received by the electronic device 502B.

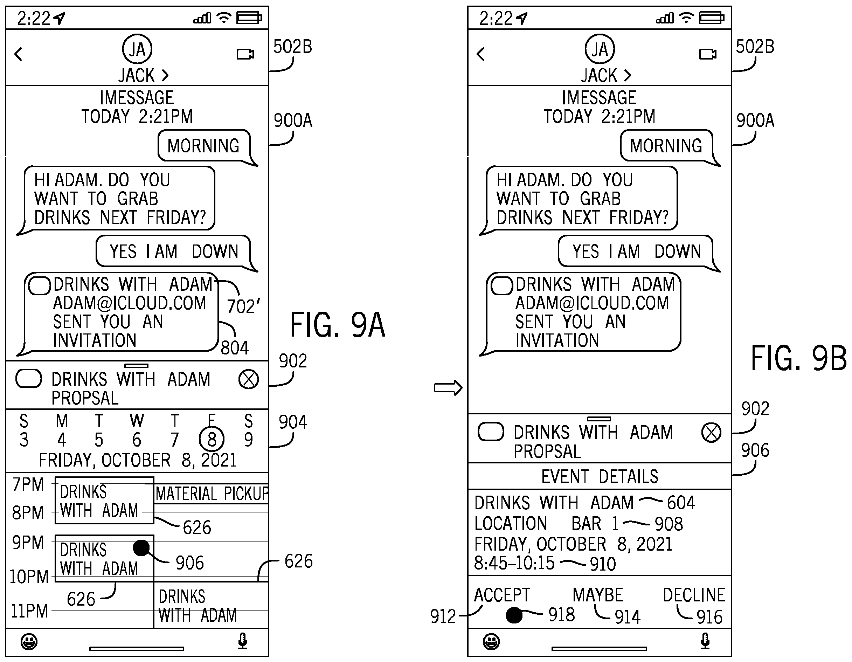

The data message icon 702' may be a selectable icon that, when selected, causes a GUI of electronic device 502B to display the details of the meeting proposal provided by electronic device 502A. FIG. 9A is a schematic diagram, illustrating a GUI state 900A where a proposal confirmation GUI element 902 is presented in response to selection of the data message icon 702'. Specifically, proposal confirmation GUI element 902 may include GUI components enabling a user of the electronic device 502B to select from the proposal options (e.g., the times and/or locations) provided by the user of electronic device 502A. In FIG. 9A, for example, an electronic calendar proposal confirmation panel 904 is rendered, where each of the proposal timeslots 626 selected in FIG. 6C is displayed. The user of electronic device 502B is allowed to select one of the proposal timeslots 626, indicating selection and/or confirmation of a particular one of the proposal timeslots 626. A similar map panel may also be provided via proposal confirmation GUI element 902 to enable the user of electronic device 502B to select from the proposal locations 636 provided from electronic device 502A in FIG. 6D.

FIG. 9B illustrates a subsequent GUI state 900B, after selecting proposal options via GUI state 900A. In GUI state 900B, proposal confirmation GUI element 902 provides a summary view 906 of the meeting details to be confirmed by the user of electronic device 502B. For example, as illustrated, the title 604 is provided, the location 908 and/or the selected timeslot 910 (e.g., selected via proposal confirmation GUI element 902 in GUI state 900A) may be displayed in the summary view 906. In some embodiments, the summary view 906 may be rendered by sending selected proposal options to electronic device 502A, resulting in a trigger that causes electronic device 502A to automatically send a meeting invite with the selected proposal options (e.g., in the background without a visual indicator and/or without requiring manual GUI interaction of the user of electronic device 502A) back to electronic device 502B, causing a meeting request to be rendered (e.g., the summary view 906).

The summary view 906 may include meeting request response affordances, such as an accept affordance 912, a maybe / tentative affordance 914, and/or a decline affordance 916, enabling the user of electronic device 502B to indicate a response for the meeting request associated with the selected proposals, via an interaction (e.g., interaction 918).

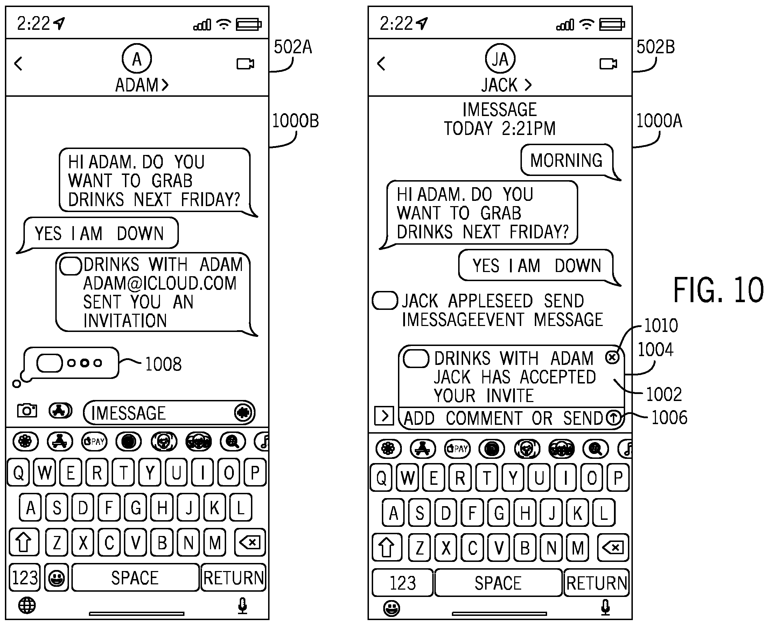

When the response is selected, the response may be generated for sending to the electronic device 502A. FIG. 10 provides schematic diagrams, illustrating GUI states 1000A and 1000B of electronic devices 502B and 502A, respectively, where the meeting proposal response is generated for sending to electronic device 502A. As illustrated, a data message icon 1002 ) representative of a generated data message (e.g., an object designed to be conveyed via the communications application) is rendered in a message input affordance 1004 where messages to send to recipients (e.g., a user of electronic device 502A) may be inputted. The data message, in this instance, is a data object providing the meeting response indication along with the selected meeting proposals. To send the generated data message to the electronic device 502A, a transmit message affordance 1006 may be actuated while the data message icon 1002 is rendered within the message input affordance 1004. Prior to sending the data object, the GUI state 1000B may display a message generation awareness icon 1008, indicating that a message is being generated for the communication between electronic device 502B and 502A at the other electronic device (e.g., electronic device 502B). In some embodiments, the message generation awareness icon 1008 may be displayed while the provided meeting proposals provided in the meeting proposal data message are being selected (e.g., while the meeting proposal confirmation GUI element 612 is displayed on electronic device 502B, while a particular time and/or location proposal from the set of proposals is being selected, etc.). In some embodiments, the message generation awareness icon 1008 may be displayed starting at a time when the data message icon 1002 is rendered within the message input affordance 1004. The message generation awareness icon 1008 may be displayed until the data message is sent (e.g., via actuation of transmit message affordance 1006) and/or the data message is withdrawn (e.g., deleted and/or cancelled from generation, such as by actuating cancel affordance 1010 and/or a cancel affordance of the meeting proposal generator GUI element 612). The message generation awareness icon 1008 may be refrained from display when a configuration of the electronic device 502B opts out of providing such awareness to other electronic devices.

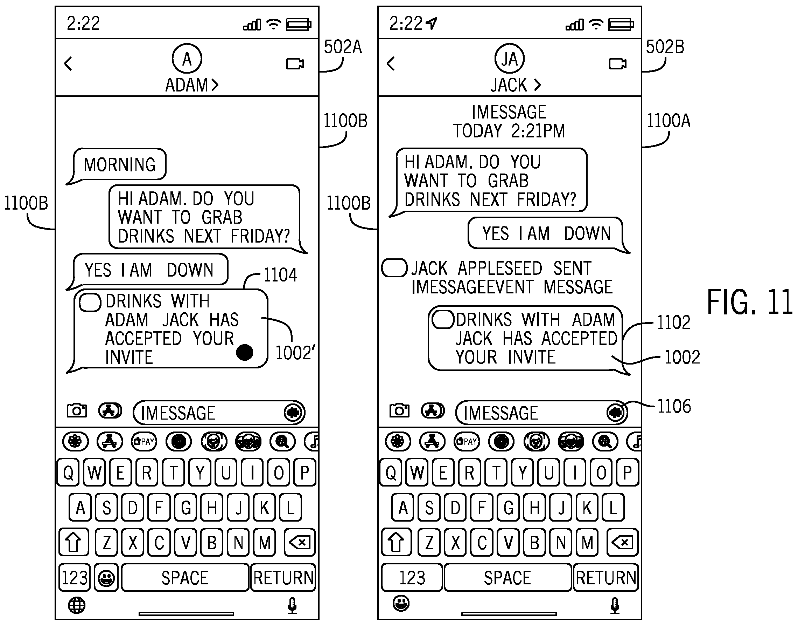

FIG. 11 is a schematic diagram, illustrating GUI states 1100A and 1100B of electronic devices 502B and 502A, respectively, after the electronic calendar meeting request response data message is transmitted from electronic device 502B to electronic device 502A, in accordance with one or more embodiments of the current application. In GUI state 1100A of the electronic device 502B that transmitted the meeting request response data message, a message indicator 1102 (e.g., a historical message cloud icon) indicating that the data message was sent (e.g., by displaying the data message icon 1002 within the message indicator 1102) is displayed.

Electronic device 502A may receive a message 1104 containing the data message icon 1002', which may be rendered in GUI state 1100B of electronic device 502A. If a configuration of the electronic device 502A allows, a read receipt may be provided by the electronic device 502A to electronic device 502B, resulting in an indication 1106 that that a user of the electronic device 502A has received and seen the data message (e.g., by seeing the data message icon 1102') provided in message 1104 received by the electronic device 502B.

The data message icon 1002' may be a selectable icon that, when selected, causes a GUI of electronic device 502A to create an electronic calendar entry in the electronic calendar of electronic device 502A with the selected meeting time, location, and other details. In embodiments, where the response was selected based upon an automatic meeting invite generated at electronic device 502A, the response may update the already-present electronic calendar entry corresponding to the automatically generated meeting invite with the updated response type selected via electronic device 502B.

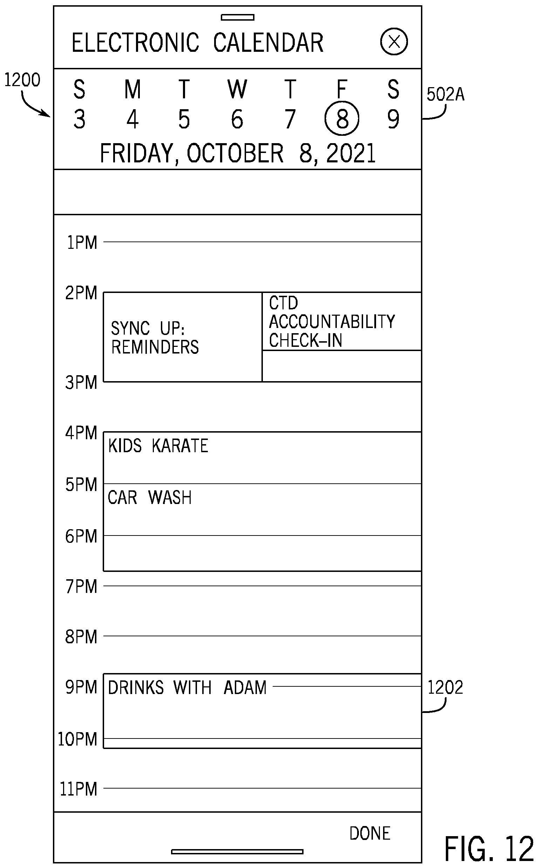

FIG. 12 is a schematic diagram, illustrating the electronic calendar GUI 1200 of the proposing electronic device 502A after receiving and/or opening the indication of response from electronic device 502B, in accordance with one or more embodiments of the current application. As illustrated, the electronic calendar GUI 1200 includes an electronic calendar entry 1202 for the confirmed meeting (e.g., based upon receiving an "accept" and/or "maybe" or "tentative" response indication from electronic device 502B. While not illustrated, the electronic device 502B may include a corresponding electronic calendar entry, which may be generated upon providing an accept" and/or "maybe" or "tentative" response indication via affordance 912 and/or 914 of FIG. 9B.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...," it is intended that such elements are to be interpreted under 35 U.S.C. 112(f). However, for any claims containing elements designated in any other manner, it is intended that such elements are not to be interpreted under 35 U.S.C. 112(f).

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

### NUMBERED STATEMENTS OF INVENTION

1. A tangible, non-transitory, computer-readable medium, comprising computer-readable instructions that when executed by one or more processors of one or more computers, cause the one or more computers to:
   determine, from one or more communications messages provided between a first electronic device and a second electronic device, an indication of a meeting between a first user of the first electronic device and second user of the second electronic device, wherein the one or more communication messages are generated via a first communications application graphical user interface (GUI) of the first electronic device, a second communications application GUI of the second electronic device, or both;
   in response to determining the indication of the meeting from the one or more communication messages, determine whether a meeting parameter is missing from the one or more communication messages;
   in response to determining that the meeting parameter is missing from the one or more communication messages, render in the first communications application GUI, the second communications application GUI, or both, a recommendation to generate an electronic calendar proposal for the meeting;
   receive a GUI input providing a response to the recommendation, the response to the recommendation indicating to generate the electronic meeting proposal; and
   in response to receiving the GUI input, render in the first communications application GUI, the second communications application GUI, or both, a meeting proposal generator GUI element, the meeting proposal generator GUI element comprising an affordance to input the missing meeting parameter.
2. The tangible, non-transitory, computer-readable medium of statement 1, comprising computer-readable instructions that when executed by the one or more processors of the one or more computers, cause the one or more computers to:
   receive, via the affordance, an indication of the missing meeting parameter; and
   generate a meeting proposal data object comprising the missing meeting parameter.
3. The tangible, non-transitory, computer-readable medium of statement 2, comprising computer-readable instructions that when executed by the one or more processors of the one or more computers, cause the one or more computers to:
   extract from the one or more communication messages one or more non-missing meeting parameters; and
   provide the one or more non-missing meeting parameters in the generated meeting proposal data object.
4. The tangible, non-transitory, computer-readable medium of statement 2, comprising computer-readable instructions that when executed by the one or more processors of the one or more computers, cause the one or more computers to:
   render a meeting proposal data object icon representative of the meeting proposal data object in a message input affordance configured to enable users to input a communications message to transmit.
5. The tangible, non-transitory, computer-readable medium of statement 4, comprising computer-readable instructions that when executed by the one or more processors of the one or more computers, cause the one or more computers to:
   receive an indication of an interaction with a message transmit affordance; and
   in response to the receiving the indication, transmit the meeting proposal data object to the other of the first electronic device or the second electronic device.
6. The tangible, non-transitory, computer-readable medium of statement 2, wherein the missing meeting parameter comprises a meeting time, the computer-readable medium comprising computer-readable instructions that when executed by the one or more processors of the one or more computers, cause the one or more computers to:
   generate a calendar view within the meeting proposal generator GUI element, the calendar view comprising a timeslot proposal affordance enabling selection of a plurality of timeslots to propose for the meeting.
7. The tangible, non-transitory, computer-readable medium of statement 6, comprising computer-readable instructions that when executed by the one or more processors of the one or more computers, cause the one or more computers to:
   query a local electronic calendar application for existing entries via a calendar interface communicatively coupling the local electronic calendar application and the meeting proposal generator GUI element; and
   render, in the calendar view, the existing entries.
8. The tangible, non-transitory, computer-readable medium of statement 6, comprising computer-readable instructions that when executed by the one or more processors of the one or more computers, cause the one or more computers to:
   identify, based at least in part on the one or more communication messages, a range of time that the meeting time will likely occur within; and
   render, in the calendar view, a default view comprising the range of time that the meeting time will likely occur within.
9. The tangible, non-transitory, computer-readable medium of statement 2, wherein the missing meeting parameter comprises a meeting location, the computer-readable medium comprising computer-readable instructions that when executed by the one or more processors of the one or more computers, cause the one or more computers to:
   generate a location view within the meeting proposal generator GUI element, the location view comprising a location proposal affordance enabling selection of one or more locations to propose for the meeting.
10. The tangible, non-transitory, computer-readable medium of statement 9, comprising computer-readable instructions that when executed by the one or more processors of the one or more computers, cause the one or more computers to:
   identify, based at least in part on the one or more communication messages, a location range that the meeting location will likely occur within; and
   render, in the location view, a default view comprising the location range.
11. The tangible, non-transitory, computer-readable medium of statement 10, comprising computer-readable instructions that when executed by the one or more processors of the one or more computers, cause the one or more computers to:
   query a location provision service for a keyword associated with a meeting type;
   receive a list of locations associated with the keyword; and
   display, in the location view, selectable affordances for each of the locations, enabling the locations to be selected as meeting location proposals.
12. The tangible, non-transitory, computer-readable medium of statement 1, comprising computer-readable instructions that when executed by the one or more processors of the one or more computers, cause the one or more computers to:
   in response to determining that the meeting parameter is not missing from the one or more communication messages, render in the first communications application GUI, the second communications application GUI, or both, a recommendation to generate an electronic calendar entry for the meeting;
   receive a second GUI input providing a response to the recommendation to generate the electronic calendar entry for the meeting, indicating to generate the electronic calendar entry; and
   in response to receiving the second GUI input, generate the electronic calendar entry in an electronic calendar application with meeting parameters extracted from the one or more communication messages.
13. A computer-implemented method, comprising:
   identifying, via a processor, based upon one or more communications messages provided between a first electronic device and a second electronic device, an indication of a meeting between a first user of the first electronic device and second user of the second electronic device, wherein the one or more communications messages are generated via a first communications application graphical user interface (GUI) of the first electronic device, a second communications application GUI of the second electronic device, or both;
   in response to identifying the indication of the meeting from the one or more communication messages, determining, via the processor, whether a meeting parameter is missing from the one or more communication messages;
   in response to determining that the meeting parameter is missing from the one or more communication messages:
      rendering, via the processor, in the first communications application GUI, a recommendation to generate an electronic calendar proposal for the meeting;
      receiving, via the first communications application GUI, a GUI input providing a response to the recommendation, the response to the recommendation indicating to generate the electronic meeting proposal; and
      in response to receiving the GUI input, rendering, in the first communications application GUI, a meeting proposal generator GUI element, the meeting proposal generator GUI element comprising an affordance to input the missing meeting parameter; and
   in response to determining that the meeting parameter is not missing from the one or more communication messages:
      rendering in the first communications application GUI, a recommendation to generate an electronic calendar entry for the meeting;
      receiving a second GUI input providing a response to the recommendation to generate the electronic calendar entry for the meeting, indicating to generate the electronic calendar entry; and
      in response to receiving the second GUI input, generating the electronic calendar entry in an electronic calendar application with meeting parameters extracted from the one or more communication messages.
14. The computer-implemented method of statement 13, wherein the meeting parameter is missing, comprising:
   receiving, via the affordance, an indication of the missing meeting parameter; and
   generating a meeting proposal data object comprising the missing meeting parameter.
15. The computer-implemented method of statement 14, comprising:
   extracting from the one or more communication messages one or more non-missing meeting parameters;
   providing the one or more non-missing meeting parameters in the generated meeting proposal data object;
   rendering a meeting proposal data object icon representative of the meeting proposal data object in a message input affordance configured to enable users to input a communications message to transmit;
   receiving an indication of an interaction with a message transmit affordance; and
   in response to the receiving the indication, transmitting the meeting proposal data object to the second electronic device.
16. The computer-implemented method of statement 14, wherein the missing meeting parameter comprises a meeting time, the computer-implemented method comprising:
   generating a calendar view within the meeting proposal generator GUI element, the calendar view comprising a timeslot proposal affordance enabling selection of a plurality of timeslots to propose for the meeting;
   querying a local electronic calendar application for existing entries via a calendar interface communicatively coupling the electronic calendar application and the meeting proposal generator GUI element; and
   rendering, in the calendar view, the existing entries.
17. The computer-implemented method of statement 16, comprising:
   identifying, based at least in part on the one or more communications messages, a range of time that the meeting time will likely occur within; and
   rendering, in the calendar view, a default view comprising the range of time that the meeting time will likely occur within.
18. The computer-implemented method of statement 14, wherein the missing meeting parameter comprises a meeting location, the computer-implemented method comprising:
   generating a location view within the meeting proposal generator GUI element, the location view comprising a location proposal affordance enabling selection of one or more locations to propose for the meeting;
   querying a location provision service for a keyword associated with a meeting type;
   receiving a list of locations associated with the keyword; and
   displaying, in the location view, selectable affordances for each of the locations, enabling the locations to be selected as meeting location proposals.
19. A system, comprising:
   memory; and
   one or more processors configured to:
      host a communications application;
      identify based upon one or more communications messages provided between a first electronic device and a second electronic device, within the communications application, an indication of a meeting between a first user of the first electronic device and second user of the second electronic device, wherein the one or more communication messages are generated via a first communications application graphical user interface (GUI) of the first electronic device, a second communications application GUI of the second electronic device, or both;
      in response to identifying the indication of the meeting from the one or more communication messages, determine, whether a meeting parameter is missing from the one or more communication messages;
      in response to determining that the meeting parameter is missing from the one or more communication messages:
         render, in the first communications application GUI, a recommendation to generate an electronic calendar proposal for the meeting;
         receive, via the first communications application GUI, a GUI input providing a response to the recommendation, the response to the recommendation indicating to generate the electronic meeting proposal; and
         in response to receiving the GUI input, render, in the first communications application GUI, a meeting proposal generator GUI element, the meeting proposal generator GUI element comprising an affordance to input the missing meeting parameter; and
      in response to determining that the meeting parameter is not missing from the one or more communication messages:
         render in the first communications application GUI, a recommendation to generate an electronic calendar entry for the meeting;
         receive a second GUI input providing a response to the recommendation to generate the electronic calendar entry for the meeting, indicating to generate the electronic calendar entry; and
         in response to receiving the second GUI input, generate the electronic calendar entry in an electronic calendar application with meeting parameters extracted from the one or more communication messages.
20. The system of statement 19, wherein the meeting parameter is missing, and wherein the one or more processors are configured to:
   extract from the one or more communication messages one or more non-missing meeting parameters;
   receive, via the affordance, an indication of the missing meeting parameter;
   generate a meeting proposal data object comprising the one or more non-missing meeting parameters and the missing meeting parameter;
   render a meeting proposal data object icon representative of the meeting proposal data object in a message input affordance configured to enable users to input a communications message to transmit;
   receive an indication of an interaction with a message transmit affordance; and
   in response to the receiving the indication, transmit the meeting proposal data object to the second electronic device.

## Claims

1. A computer-readable medium, comprising computer-readable instructions that when executed by one or more processors of one or more computers, cause the one or more computers to:
determine, from one or more communications messages provided between a first electronic device and a second electronic device, an indication of a meeting between a first user of the first electronic device and second user of the second electronic device, wherein the one or more communication messages are generated via a first communications application graphical user interface (GUI) of the first electronic device, a second communications application GUI of the second electronic device, or both;
in response to determining the indication of the meeting from the one or more communication messages, determine whether a meeting parameter is missing from the one or more communication messages;
in response to determining that the meeting parameter is missing from the one or more communication messages, render in the first communications application GUI, the second communications application GUI, or both, a recommendation to generate an electronic calendar proposal for the meeting;
receive a GUI input providing a response to the recommendation, the response to the recommendation indicating to generate the electronic meeting proposal; and
in response to receiving the GUI input, render in the first communications application GUI, the second communications application GUI, or both, a meeting proposal generator GUI element, the meeting proposal generator GUI element comprising an affordance to input the missing meeting parameter.

2. The computer-readable medium of claim 1, comprising computer-readable instructions that when executed by the one or more processors of the one or more computers, cause the one or more computers to:
receive, via the affordance, an indication of the missing meeting parameter; and
generate a meeting proposal data object comprising the missing meeting parameter.

3. The computer-readable medium of claim 2, comprising computer-readable instructions that when executed by the one or more processors of the one or more computers, cause the one or more computers to:
extract from the one or more communication messages one or more non-missing meeting parameters; and
provide the one or more non-missing meeting parameters in the generated meeting proposal data object.

4. The computer-readable medium of claims 2-3, comprising computer-readable instructions that when executed by the one or more processors of the one or more computers, cause the one or more computers to:
render a meeting proposal data object icon representative of the meeting proposal data object in a message input affordance configured to enable users to input a communications message to transmit.

5. The computer-readable medium of claim 4, comprising computer-readable instructions that when executed by the one or more processors of the one or more computers, cause the one or more computers to:
receive an indication of an interaction with a message transmit affordance; and
in response to the receiving the indication, transmit the meeting proposal data object to the other of the first electronic device or the second electronic device.

6. The computer-readable medium of claims 2-5, wherein the missing meeting parameter comprises a meeting time, the computer-readable medium comprising computer-readable instructions that when executed by the one or more processors of the one or more computers, cause the one or more computers to:
generate a calendar view within the meeting proposal generator GUI element, the calendar view comprising a timeslot proposal affordance enabling selection of a plurality of timeslots to propose for the meeting.

7. The computer-readable medium of claims 2-6, wherein the missing meeting parameter comprises a meeting location, the computer-readable medium comprising computer-readable instructions that when executed by the one or more processors of the one or more computers, cause the one or more computers to:
generate a location view within the meeting proposal generator GUI element, the location view comprising a location proposal affordance enabling selection of one or more locations to propose for the meeting.

8. The computer-readable medium of claim 7, comprising computer-readable instructions that when executed by the one or more processors of the one or more computers, cause the one or more computers to:
identify, based at least in part on the one or more communication messages, a location range that the meeting location will likely occur within; and
render, in the location view, a default view comprising the location range.

9. The computer-readable medium of claim 8, comprising computer-readable instructions that when executed by the one or more processors of the one or more computers, cause the one or more computers to:
query a location provision service for a keyword associated with a meeting type;
receive a list of locations associated with the keyword; and
display, in the location view, selectable affordances for each of the locations, enabling the locations to be selected as meeting location proposals.

10. A computer-implemented method, comprising:
identifying, via a processor, based upon one or more communications messages provided between a first electronic device and a second electronic device, an indication of a meeting between a first user of the first electronic device and second user of the second electronic device, wherein the one or more communications messages are generated via a first communications application graphical user interface (GUI) of the first electronic device, a second communications application GUI of the second electronic device, or both;
in response to identifying the indication of the meeting from the one or more communication messages, determining, via the processor, whether a meeting parameter is missing from the one or more communication messages;
in response to determining that the meeting parameter is missing from the one or more communication messages:
rendering, via the processor, in the first communications application GUI, a recommendation to generate an electronic calendar proposal for the meeting;
receiving, via the first communications application GUI, a GUI input providing a response to the recommendation, the response to the recommendation indicating to generate the electronic meeting proposal; and
in response to receiving the GUI input, rendering, in the first communications application GUI, a meeting proposal generator GUI element, the meeting proposal generator GUI element comprising an affordance to input the missing meeting parameter; and
in response to determining that the meeting parameter is not missing from the one or more communication messages:
rendering in the first communications application GUI, a recommendation to generate an electronic calendar entry for the meeting;
receiving a second GUI input providing a response to the recommendation to generate the electronic calendar entry for the meeting, indicating to generate the electronic calendar entry; and
in response to receiving the second GUI input, generating the electronic calendar entry in an electronic calendar application with meeting parameters extracted from the one or more communication messages.

11. The computer-implemented method of claim 10, wherein the meeting parameter is missing, comprising:
receiving, via the affordance, an indication of the missing meeting parameter; and
generating a meeting proposal data object comprising the missing meeting parameter.

12. The computer-implemented method of claim 11, comprising:
extracting from the one or more communication messages one or more non-missing meeting parameters;
providing the one or more non-missing meeting parameters in the generated meeting proposal data object;
rendering a meeting proposal data object icon representative of the meeting proposal data object in a message input affordance configured to enable users to input a communications message to transmit;
receiving an indication of an interaction with a message transmit affordance; and
in response to the receiving the indication, transmitting the meeting proposal data object to the second electronic device.

13. The computer-implemented method of claims 11-12, wherein the missing meeting parameter comprises a meeting location, the computer-implemented method comprising:
generating a location view within the meeting proposal generator GUI element, the location view comprising a location proposal affordance enabling selection of one or more locations to propose for the meeting;
querying a location provision service for a keyword associated with a meeting type;
receiving a list of locations associated with the keyword; and
displaying, in the location view, selectable affordances for each of the locations, enabling the locations to be selected as meeting location proposals.

14. A system, comprising:
memory; and
one or more processors configured to:
host a communications application;
identify based upon one or more communications messages provided between a first electronic device and a second electronic device, within the communications application, an indication of a meeting between a first user of the first electronic device and second user of the second electronic device, wherein the one or more communication messages are generated via a first communications application graphical user interface (GUI) of the first electronic device, a second communications application GUI of the second electronic device, or both;
in response to identifying the indication of the meeting from the one or more communication messages, determine, whether a meeting parameter is missing from the one or more communication messages;
in response to determining that the meeting parameter is missing from the one or more communication messages:
render, in the first communications application GUI, a recommendation to generate an electronic calendar proposal for the meeting;
receive, via the first communications application GUI, a GUI input providing a response to the recommendation, the response to the recommendation indicating to generate the electronic meeting proposal; and
in response to receiving the GUI input, render, in the first communications application GUI, a meeting proposal generator GUI element, the meeting proposal generator GUI element comprising an affordance to input the missing meeting parameter; and
in response to determining that the meeting parameter is not missing from the one or more communication messages:
render in the first communications application GUI, a recommendation to generate an electronic calendar entry for the meeting;
receive a second GUI input providing a response to the recommendation to generate the electronic calendar entry for the meeting, indicating to generate the electronic calendar entry; and
in response to receiving the second GUI input, generate the electronic calendar entry in an electronic calendar application with meeting parameters extracted from the one or more communication messages.

15. The system of claim 14, wherein the meeting parameter is missing, and wherein the one or more processors are configured to:
extract from the one or more communication messages one or more non-missing meeting parameters;
receive, via the affordance, an indication of the missing meeting parameter;
generate a meeting proposal data object comprising the one or more non-missing meeting parameters and the missing meeting parameter;
render a meeting proposal data object icon representative of the meeting proposal data object in a message input affordance configured to enable users to input a communications message to transmit;
receive an indication of an interaction with a message transmit affordance; and
in response to the receiving the indication, transmit the meeting proposal data object to the second electronic device.
